# DEMANDE DE BREVET EUROPEEN

(11) **EP 3 261 080 A1**
(43) Date de publication de la demande: **27.12.2017**
(21) Numéro de dépôt: 17176689.2
(22) Date de dépôt: 19.06.2017
(51) Int. Cl.: G09B 15/06

(54) **DISPOSITIF AMOVIBLE D'AIDE AU POSITIONNEMENT DE DOIGTS SUR UN ARCHET**

(30) Priorité: 20.06.2016 FR 1655725
(71) Demandeur: Bourin, Odile, 92300 Levallois-Perret (FR)
(72) Inventeur: Bourin, Odile, 92300 Levallois-Perret (FR)
(74) Mandataire: Regimbeau

(57) **Abrégé**

La présente invention concerne un dispositif amovible d'aide au positionnement de doigts sur un archet pour instrument à cordes comprenant :
- un canal de réception d'une partie de l'archet ;
- une première aile comprenant une surface extérieure de positionnement de doigt comportant un élément de marquage agencé pour positionner un pouce ;
- une seconde aile comprenant une surface extérieure de positionnement des doigts comportant un renflement agencé pour positionner un majeur ; et
- lesdites première et seconde ailes sont opposées, reliées par un dos de liaison (230) et séparées par ledit canal de réception ;

## Description

### DOMAINE DE L'INVENTION

L'invention concerne le domaine des dispositifs d'aide à l'apprentissage d'instruments de musique.

Plus précisément, la présente invention concerne un dispositif amovible d'aide au positionnement des doigts sur un archet pour instrument à cordes, notamment le violoncelle.

### ÉTAT DE LA TECHNIQUE

L'apprentissage d'instruments à cordes utilisant un archet pose de nombreuses difficultés, notamment pour un public débutant jeune ou adulte.

L'une de ces difficultés est la tenue correcte de l'archet. En effet, le positionnement des doigts est loin d'être instinctif, et l'élève peut passer par une phase plus ou moins longue avant d'acquérir une position correcte des doigts sur l'archet.

Une mauvaise tenue, en plus d'entraîner un rendu sonore imparfait, passe généralement par une crispation de la main sur l'archet, et du bras et de l'épaule du bras tenant l'archet provoquant rapidement un inconfort et une fatigue musculaire.

L'apprentissage de l'instrument se trouve ainsi ralenti et est beaucoup moins gratifiant.

Il existe des dispositifs visant à favoriser l'apprentissage du positionnement des doigts sur l'archet.

Par exemple, la publication US 7595441 présente un tel dispositif pour l'apprentissage du violon ou de l'alto. Cependant, un tel dispositif est inapte dans le cas d'une utilisation avec un violoncelle, le positionnement des doigts sur l'archet étant très différent.

On connaît également la publication US 8273973 divulguant un dispositif de maintien d'archet de violoncelle. Cependant, un tel dispositif présente des inconvénients majeurs. Ainsi, il présente un poids important, ce qui dans le cas de l'apprentissage avec de jeunes enfants et des débutants adultes se révèle particulièrement inadapté.

Il présente également un volume important, l'espace, entre le pouce et les autres doigts, présente ainsi une configuration éloignée d'une position des doigts sur l'archet sans dispositif d'aide à la tenue. En conséquence, le passage d'un apprentissage ou jeu avec dispositif à un apprentissage ou jeu sans dispositif présente une différence marquée pour le positionnement des doigts.

De plus, le dispositif propose une configuration de guidage de certains doigts en contraignant leurs dispositions, ce qui offre moins de libertés aux articulations.

Également, le dispositif exposé dans cette publication nécessite pour être attaché et détaché de l'archet, le démontage d'une partie de l'archet.

Il existe donc un besoin pour proposer une solution permettant un apprentissage facilité du maintien de l'archet d'un instrument à cordes tel que le violoncelle, présentant une configuration non contraignante pour les articulations de la main, tout en étant adaptée à un usage par de jeunes enfants, des adultes débutants et/ou des violoncellistes souhaitant corriger leur position. Un tel dispositif se doit donc de présenter des caractéristiques de volume et de poids très réduites.

Il existe également un besoin pour un dispositif pouvant se fixer et être enlevé de l'archet de manière très simple, sans nécessiter le démontage d'une partie de l'archet.

### PRÉSENTATION DE L'INVENTION

Compte tenu des problématiques évoquées ci-avant, un but de l'invention est de proposer un dispositif amovible d'aide au positionnement de doigts sur un archet, proposant une configuration de positionnement des doigts adaptée à une disposition anatomique non contraignante.

Un autre but de l'invention est d'assurer que le dispositif amovible d'aide au positionnement est adapté à être utilisé par de jeunes enfants, des adultes débutants et des violoncellistes non débutants souhaitant corriger leur position.

Un autre but de l'invention est de permettre qu'un tel dispositif présente des moyens de fixation stables sur l'archet, tout en pouvant être détaché de manière simplifiée.

Dans ce contexte, ce but est atteint selon la présente invention grâce à un dispositif amovible d'aide au positionnement de doigts sur un archet pour instrument à cordes comprenant :
- un canal de réception d'une partie de l'archet ;
- une première aile comprenant une surface extérieure de positionnement de doigt comportant un élément de marquage agencé pour positionner un pouce ;
- une seconde aile comprenant une surface extérieure de positionnement des doigts comportant un renflement agencé pour positionner un majeur ; et
- lesdites première et seconde ailes sont opposées, reliées par un dos de liaison et séparées par ledit canal de réception.

Avantageusement mais facultativement, le dispositif selon l'invention peut en outre comprendre au moins une des caractéristiques suivantes :
- ledit élément de marquage sur ladite première aile est positionné sur une extrémité proximale du dispositif qui est destinée à être placée du côté d'une mèche de l'archet ;
- l'élément de marquage comporte une cavité ;
- ledit renflement sur ladite seconde aile est positionné sur l'extrémité proximale du dispositif qui est destinée à être placée du côté d'une mèche de l'archet ;
- le canal de réception est ouvert à ses deux extrémités axiales ainsi que radialement sur toute sa longueur, de sorte que l'engagement dudit dispositif sur l'archet est effectué par glissement depuis une extrémité de l'archet dans le canal de réception dudit dispositif ;
- il comprend une butée agencée pour limiter la course de la partie de l'archet, lorsque la partie de l'archet est reçue dans le canal ; la surface de positionnement de doigt de la première aile comprend une courbure ;
- il comprend un profil en U ;
- les ailes comprennent deux séries de poutrelles orthogonales, de préférence une pluralité de rangées de poutrelles parallèles à l'axe du canal de réception et une pluralité de rangées de poutrelles perpendiculaires à l'axe du canal de réception ;
- les ailes comprennent une pluralité de poutrelles parallèles à l'axe du canal de réception faisant saillie sur les surfaces intérieures desdites ailes ;
- le canal de réception comporte un diamètre de l'ordre de 1 cm, sensiblement égal au diamètre d'une partie de l'archet ;
- il est fabriqué par impression 3D ;
- il est composé de matière plastique.

La présente invention concerne également un ensemble comprenant un dispositif amovible d'aide au positionnement de doigts sur un archet d'instrument à cordes tel que défini précédemment et un archet, caractérisé en ce que l'archet est un archet de violoncelle ou de contrebasse.

La présente invention concerne en outre l'utilisation d'un dispositif amovible d'aide au positionnement de doigts tel que défini précédemment, caractérisé en ce que l'ensemble des doigts d'une main est positionné sur ledit dispositif à l'exception de l'index.

### DESCRIPTION DES FIGURES

D'autres caractéristiques, buts et avantages de la présente invention apparaîtront à la lecture de la description détaillée qui va suivre et en regard des dessins annexés, donnés à titre d'exemples et non limitatifs et sur lesquels :
- la figure 1 représente une vue schématique d'une baguette d'archet de violoncelle,
- les figure 2A et 2B représentent respectivement une vue schématique en perspective avant et arrière d'un dispositif amovible d'aide au positionnement de doigts sur un archet d'instrument à cordes, conforme à la présente invention,
- les figures 3A et 3B représentent respectivement une vue schématique de dessous et de dessus d'un ensemble archet d'instrument à cordes et dispositif amovible d'aide au positionnement de doigts sur un archet d'instrument à cordes, conforme à la présente invention,
- la figure 4 représente une vue schématique transversale d'un dispositif amovible d'aide au positionnement de doigts sur un archet d'instrument à cordes, conforme à la présente invention,
- la figure 5 représente une vue schématique de dessus d'un dispositif amovible d'aide au positionnement de doigts sur un archet d'instrument à cordes, conforme à la présente invention,
- la figure 6 représente une vue schématique en face avant d'un dispositif amovible d'aide au positionnement de doigts sur un archet d'instrument à cordes, conforme à la présente invention,
- la figure 7 représente une vue de dessous de la disposition des doigts sur un ensemble archet d'instrument à cordes et dispositif amovible d'aide au positionnement de doigts sur un archet d'instrument à cordes, conforme à la présente invention, et
- la figure 8 représente une vue arrière de la disposition des doigts sur un ensemble archet d'instrument à cordes et dispositif amovible d'aide au positionnement de doigts sur un archet d'instrument à cordes, conforme à la présente invention.

### DESCRIPTION DÉTAILLÉE D'AU MOINS UN MODE DE RÉALISATION DE L'INVENTION

Comme indiqué précédemment la présente invention s'applique à un dispositif amovible d'aide au positionnement de doigts sur un archet d'instrument à cordes, notamment un archet de violoncelle ou de contrebasse.

La structure d'un violoncelle ou d'une contrebasse est connue et ne sera pas décrite par la suite.

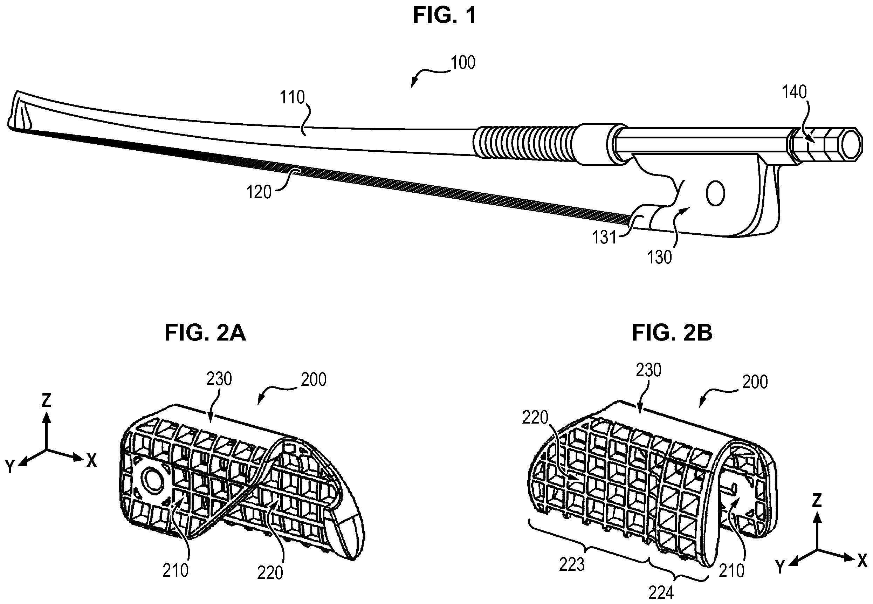

En figure 1, on a illustré un archet classique 100 de violoncelle connu de l'état de la technique.

Pour rappel, un archet classique 100 se compose principalement d'une baguette 110, de préférence en bois, ou en carbone, et d'une mèche 120 constituée de crins qui en frottant la corde du violoncelle produit la vibration de la corde et de là un son. L'archet 100 comporte sur une extrémité une hausse 130 qui comprend un ensemble de réglage 140. La mèche est fixée entre la hausse et la seconde extrémité de la baguette. La hausse 130 comprend en une extrémité un passant 131 permettant le passage, ainsi que le blocage de la mèche 120. Ledit ensemble de réglage 140 permet de régler la tension de la mèche 120, en réglant la position de la hausse 130. Dans ce but, cette dernière comporte une coulisse qui lui permet d'être déplacée le long de la baguette 110 par sollicitation d'un moyen fileté intégré à l'ensemble de réglage.

Les figures 2A et 2B représentent un dispositif amovible 200 d'aide au positionnement de doigts sur un archet 100, conforme à la présente invention.

Le dispositif 200 est formé d'un corps ayant un profil en U.

Ledit corps comporte deux ailes 210, 220, reliées par un dos de liaison 230.

La description qui va suivre sera faite en référence à un repère orthonormé X, Y, Z.

L'axe X est dénommé axe longitudinal.

L'axe Y est dénommé axe transversal.

Et l'axe Z sera dénommé axe vertical.

Le dos de liaison 230 s'étend dans une direction longitudinale parallèle à l'axe longitudinal X.

Les deux ailes 210 et 220 s'étendent essentiellement parallèlement au plan XZ.

Par rapport à un utilisateur dudit dispositif 200, on définit l'aile 210, plus proche du corps de l'utilisateur, comme l'aile interne.

On définit également l'aile 220, aile la plus éloignée du corps de l'utilisateur, comme l'aile externe.

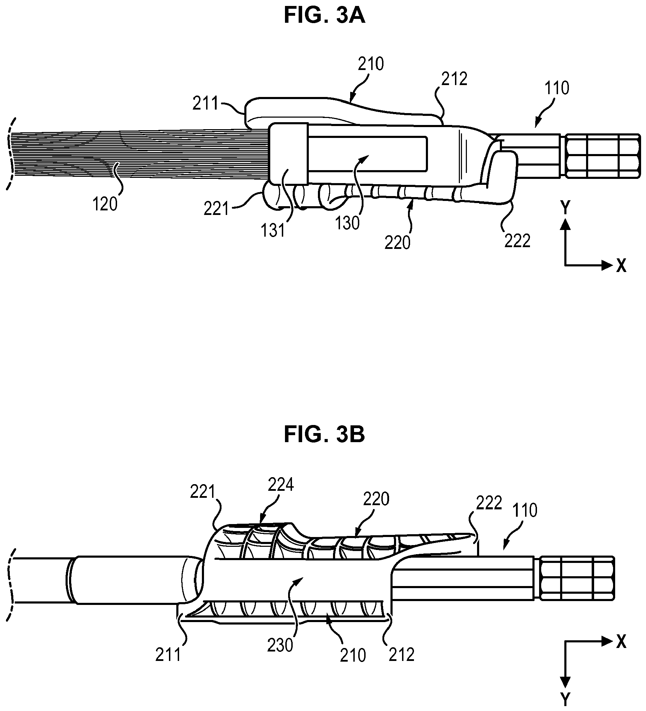

On a représenté sur les figures 3A et 3B, le dispositif amovible 200 positionné sur l'extrémité d'un archet 100. Les deux ailes 210, 220 comportent une extrémité proximale respectivement référencée 211, 221, plus proche de la mèche 120, en comparaison avec une extrémité distale respectivement référencée 212, 222, plus distante de la mèche 120.

L'archet 100 est engagé par glissement longitudinal selon l'axe X, depuis les extrémités 211,221, dans le canal du dispositif amovible 200.

Les surfaces extérieures des ailes 210 et 220 sont globalement planes et quasi parallèles entre elles et parallèles au plan XZ. Leur géométrie sera décrite plus en détail par la suite.

À titre d'exemple non limitatif, la distance entre les surfaces extérieures des ailes 210 et 220 est comprise entre environ 23mm et 17mm.

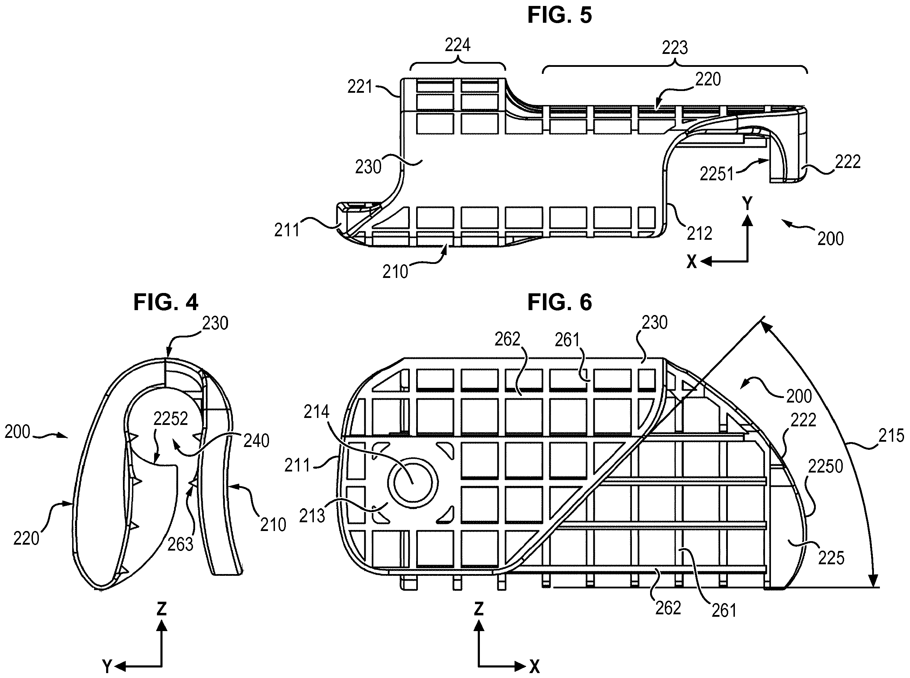

De façon plus détaillée, comme illustré en figure 4, l'aile interne 210 comporte une face extérieure d'enveloppe légèrement concave. Plus précisément encore la surface extérieure de l'aile interne 210 est de préférence cylindrique de révolution, définie par une génératrice rectiligne parallèle à l'axe X. Le rayon de courbure de cette surface extérieure de l'aile interne 210 est de préférence compris entre 30 et 50 mm, avantageusement de l'ordre de 40 mm.

L'espace formé entre les deux ailes 210 et 220 et le dos de liaison 230 définissent un canal de réception 240 de section demi-circulaire pour permettre l'engagement de la baguette 110 de l'archet 100. Ce canal de réception 240 parallèle à l'axe X, est parallèle à l'axe de la baguette 100 de l'archet 100 lorsque celle-ci est engagée dans le dispositif amovible 200.

Le canal de réception 240 est ouvert à ses deux extrémités axiales qui correspondent respectivement aux extrémités proximale et distale du dispositif, ainsi que radialement sur toute sa longueur au niveau du bord des ailes 210 et 220 opposé au dos 230.

Le canal de réception 240 comporte une section adjacente au dos de liaison 230, de plus grande dimension transversale, dont le contour est de préférence globalement cylindrique de révolution autour d'un axe parallèle à l'axe X et dont le diamètre est sensiblement égal au diamètre d'une baguette d'archet d'instrument à cordes.

À titre d'exemple non limitatif, pour un dispositif amovible 200 positionné sur un archet de violoncelle, le canal de réception 240 a une section adjacente au dos 230, de diamètre d'environ 10mm.

En s'éloignant du dos de liaison 230, dans une direction perpendiculaire à l'axe X, l'espace entre les surfaces intérieures des deux ailes 210 et 220 définit une ouverture de section légèrement divergente. Cette ouverture est définie pour permettre l'engagement de la hausse 130. En effet, la hausse 130 de l'archet 100 comporte une section transversale également légèrement divergente. Quand l'archet 100 est engagé sur le dispositif amovible 200, les surfaces intérieures des ailes 210 et 220 sont donc agencées pour venir en correspondance avec les surfaces extérieures de la hausse.

Les ailes 210, 220 sont donc disposées de part et d'autre de la hausse 130 et le dos de liaison 230 recouvre une partie de la baguette 110 de l'archet 100.

À titre d'exemple non limitatif, la longueur maximum de l'aile interne 210, considérée parallèlement à l'axe X, peut être comprise entre 35 et 55 mm, avantageusement d'environ 45mm, tandis que la longueur maximum de l'aile externe 220, considérée parallèlement à l'axe X, peut être comprise entre 45 et 65 mm, avantageusement d'environ 55mm.

Comme représenté en figure 5, l'aile externe 220 comporte sur sa face extérieure une première partie ou zone distale 223 quasi plane parallèle à l'axe XZ. Dans une seconde partie proximale, la face extérieure de l'aile externe 220 comporte un renflement 224 qui fait saillie par rapport à la facette 223 précitée.

A titre préférentiel, le renflement 224 dépasse de la facette 223 d'une amplitude comprise entre 2 et 6 mm, avantageusement de l'ordre de 4mm. La longueur du renflement 224, considérée parallèlement à l'axe X, est de préférence comprise entre 10 et 20 mm, avantageusement de l'ordre de 15 mm.

La surface extérieure du renflement 224 est de préférence convexe, typiquement cylindrique de révolution autour d'un axe parallèle à l'axe X. Le rayon de courbure de cette surface extérieure du renflement 224 est de préférence compris entre 30 et 50 mm, avantageusement de l'ordre de 40 mm.

La zone de transition entre la facette plane 223 et la face extérieure du renflement 224 est de préférence formée d'une surface concave cylindrique de révolution autour de l'axe Z.

Les surfaces intérieures des ailes 210 et 220 sont définies par des génératrices rectilignes quasi parallèles entre elles et parallèles à l'axe longitudinal X. L'extrémité proximale 211 de l'aile interne 210, s'étend au-delà de l'extrémité proximale 221 de l'aile externe 220. Dans un mode de réalisation particulier, l'écart entre les extrémités proximales des ailes interne 210 et externe 220 est compris entre 7 et 12 mm, avantageusement d'environ 9mm.

Selon le mode de réalisation préférentiel illustré sur les figures annexées, le bord proximal 211 de l'aile interne 210 est sensiblement rectiligne et parallèle à l'axe Z. Il est cependant de préférence au moins légèrement convexe, comme on le voit notamment sur la figure 6. Le bord proximal 221 de l'aile externe 220 est lui formé de préférence d'une surface plane parallèle au plan YZ.

L'extrémité distale 222 de l'aile externe 220, s'étend au-delà de l'extrémité distale 212 de l'aile interne 210.

Dans un mode de réalisation particulier, l'écart entre les extrémités distales des ailes interne 210 et externe 220 est compris entre 10 et 30 mm, avantageusement d'environ 19mm.

En référence aux figures 4 et 6, on définit la hauteur d'une aile par la distance, parallèle à l'axe Z, entre l'extrémité connectée au dos de liaison 230 et l'extrémité opposée audit dos 230. La hauteur de l'aile externe 220 est légèrement supérieure à la hauteur de l'aile interne 210. La différence étant constituée par des poutrelles 261 de l'aile externe 220 de longueur légèrement supérieure aux poutrelles 261 de l'aile interne 210.

Dans ce contexte on peut prévoir que la hauteur de l'aile interne 210 est comprise entre 25 et 33mm, avantageusement d'environ 29mm, la hauteur de l'aile externe 220 est comprise entre 26 et 35mm, avantageusement d'environ 31mm.

La largeur maximale du dispositif, considérée au niveau du renflement 224, parallèlement à l'axe Y est de préférence comprise entre 15 et 25 mm, avantageusement de l'ordre de 20 mm.

Comme illustré en figure 6, en s'éloignant du dos de liaison 230, le bord distal de l'aile interne 210 converge vers l'extrémité proximale 211.

Par exemple, le bord distal de l'aile interne 210 est globalement rectiligne et converge selon un angle 215, préférentiellement de 45° par rapport aux axes X et Z.

En s'éloignant du dos de liaison 230, le bord distal de l'aile externe 220 diverge de l'extrémité proximale, vers l'extrémité distale 222. Le bord distal de l'aile externe 220 est de préférence convexe, globalement arrondi.

L'aile externe 220 comporte en son extrémité distale 222 une excroissance 225 qui fait saillie à l'intérieur du corps.

La surface extérieure distale 2250 de l'excroissance 225 comporte un arrondi dans le prolongement de la forme arrondie du bord distal 222 de l'aile externe 220, défini par une génératrice parallèle à l'axe Y. L'excroissance 225 comporte une surface proximale intérieure 2251 plane, parallèle au plan YZ destinée à venir en contact avec une extrémité de la hausse 130 distale de la mèche 120. Comme représenté en figure 3, l'excroissance 225 constitue ainsi une butée lorsque la baguette 110 s'engage dans le canal de réception 240. En effet, la course de l'archet 100 est stoppée par le contact entre l'excroissance 225 et l'extrémité de la hausse 130 proche de l'ensemble de réglage 140.

L'excroissance 225 comporte une extrémité supérieure 2252 concave, avantageusement cylindrique de révolution autour de l'axe X, présentant un rayon de courbure destiné à permettre le passage de la baguette 110, et de préférence identique au rayon de courbure de la surface intérieure du dos de liaison 230. Ladite extrémité 2252 constitue la partie inférieure du canal de réception 240, comme illustré en figure 4. À titre d'exemple non limitatif, le rayon de courbure ce cette surface 2252 et de la face intérieure du dos 230, est d'environ 11mm.

L'extrémité 2252 permet également d'assurer la stabilité verticale du dispositif amovible 200 en venant se positionner contre la baguette 110 de l'archet 100. L'excroissance 225 peut donc empêcher le dispositif 200 de se décrocher dans une direction parallèle à l'axe X par le contact de la hausse 130 avec la surface 2251 et dans une direction parallèle à l'axe Z par contact de la baguette 110 avec la surface 2252, avantageusement, quelle que soit la taille de la hausse.

L'appui de la surface interne 2251 sur le côté arrière de la hausse de l'archet, servant de butée, et permettant ainsi d'arrêter la course latérale du dispositif 200 sur la baguette, et le dimensionnement de la surface arrondie 2252 pour venir s'appliquer sous la baguette et ainsi bloquer verticalement la course du dispositif 200, sont importants car ils permettent de toujours bien positionner au même endroit sur l'archet la main qui tient le dispositif 200, ce qui est notamment très important pour des débutants.

L'aile interne 210 comporte sur sa face extérieure, à proximité de son extrémité proximale 211, un élément de marquage 213. Par exemple, ledit élément 213 est composé par une pastille inscrite dans un carré d'environ 13 mm de côté dont les côtés sont respectivement parallèles aux axes X et Z. L'élément de marquage 213 comporte en son centre une cavité 214 de préférence circulaire, par exemple de rayon compris entre 4 et 6mm, avantageusement de l'ordre de 5mm. L'élément de marquage 213 est préférentiellement destiné au positionnement de l'extrémité d'un doigt tel que le pouce.

L'élément de marquage 213 avec la cavité 214 permet donc d'indiquer par sensation tactile et/ou retour visuel le positionnement idéal du pouce sur le dispositif amovible 200 de positionnement des doigts. De plus, la courbure de la face extérieure de l'aile interne 210 favorise un contact idéal entre ladite face extérieure et la pulpe du pouce.

De préférence, l'extrémité de la pulpe du pouce, proximale de l'index, est positionnée au centre de l'élément de marquage 213.

Le pouce se trouve ainsi correctement positionné et dans une configuration non contraignante. En effet, l'élément de marquage 213 permet le placement du doigt, tel que le pouce, tout en laissant une liberté à l'articulation du doigt.

Le centre de l'élément de marquage 213 est de préférence situé sensiblement à mi-hauteur de l'aile 210, typiquement à une distance comprise entre 10 et 16mm et avantageusement de l'ordre de 13mm, d'un plan parallèle aux axes X et Y et passant par la surface intérieure du dos 230. Le centre de l'élément de marquage 213 est par ailleurs sensiblement sécant du bord proximal de l'aile externe 220 et situé à environ 10mm du bord proximal de l'aile interne 210.

Comme illustré dans les figures 2B, 3B et 5 et évoqué précédemment, l'extrémité proximale 221 de l'aile externe 220 comporte un renflement 224 destiné à être en contact avec un doigt tel que le majeur. Par exemple, le renflement a une largeur d'environ 14mm. Cette largeur est idéalement dimensionnée pour correspondre à la largeur moyenne d'un majeur.

Le renflement 224 présente un aspect arrondi qui est en correspondance avec une configuration arrondie du doigt positionné.

Cette zone de renflement 224 permet ainsi un positionnement du majeur qui se trouve légèrement en avant par rapport aux autres doigts positionnés sur la surface plane 223. Ce positionnement permet idéalement d'éviter le blocage des tendons fléchisseurs de la main. Dans une direction d'élongation du canal de réception 240, la longueur de la surface plane 223 est de par exemple, 41mm au maximum.

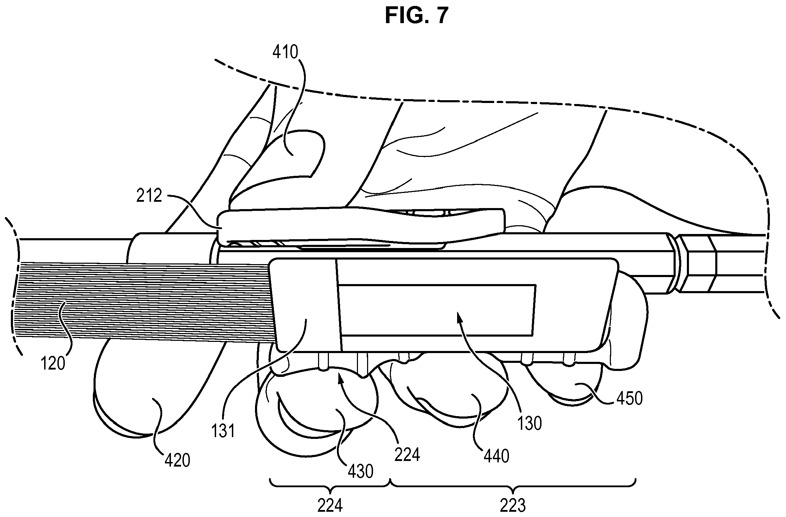

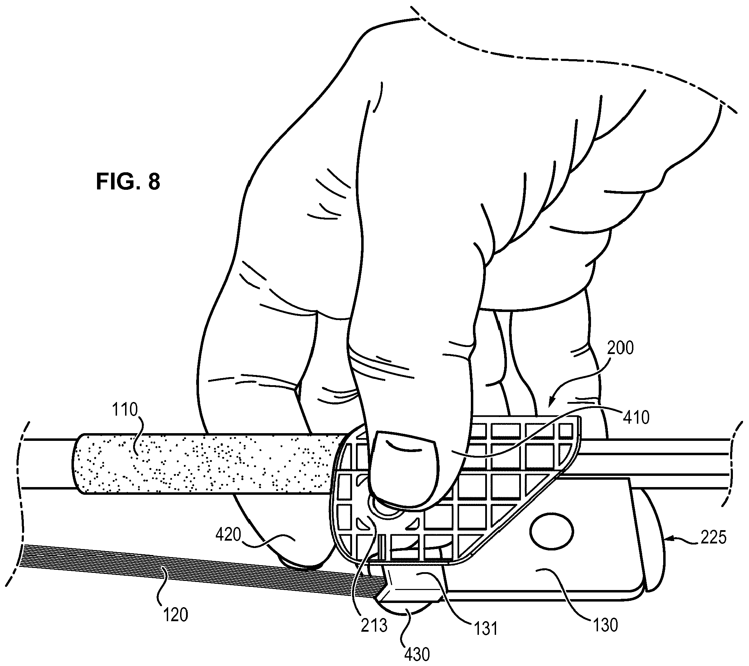

Comme illustré en figures 7 et 8, ainsi positionnés sur le dispositif amovible 200, le pouce 410 et le majeur 430 sont légèrement décalés. Par rapport à la mèche 120, le pouce 410 est positionné plus en avant sur ladite mèche 120 en comparaison du majeur 430.

L'annulaire 440 et l'auriculaire 450 sont positionnés sur la partie plane 223 de la surface extérieure de l'aile externe 220.

Le renflement 224 destiné au positionnement du majeur 430 étant disposé en extrémité, plus précisément sur l'extrémité proximale du dispositif, l'index 420 ne repose pas sur le dispositif amovible 200 de positionnement des doigts.

Idéalement, le renflement 224 est positionné en vis-à-vis du passant 131 de l'archet 100.

Comme représenté en figure 8, le pouce 410 est positionné sur l'élément de marquage 213. Plus précisément, l'extrémité de la pulpe du pouce, proximale de l'index, est positionnée au centre de l'élément de marquage 213.

Comme illustré en figures 2, 5 et 6, le dispositif amovible de positionnement 200 est conçu de manière ajourée et non pas sous forme de parois pleines. Ainsi, les ailes interne 210 et externe 220 comportent une pluralité d'ouvertures.

À l'exception du dos de liaison 230, de l'élément de marquage 213 et de l'excroissance 225, le dispositif amovible de positionnement 200 est composé ainsi d'un ensemble de deux séries de poutrelles, parallèles entre elles au niveau d'une série commune, mais transversales deux à deux entre les deux séries et raccordées entre elles au niveau de leurs points de croisement.

Ainsi, les ailes 210 et 220 comprennent une première pluralité de rangées de poutrelles 262 parallèles à la direction d'élongation X du canal de réception 240 et une deuxième pluralité de rangées de poutrelles 261 perpendiculaires à ladite direction d'élongation X et globalement parallèle à l'axe Z.

La conception ajourée permet d'obtenir un dispositif amovible 200 de poids très faible, tout en disposant d'une résistance importante.

Dans un mode de réalisation particulier, l'aile interne 210 comporte entre quatre et sept poutrelles 261 parallèles à l'axe Z. Ladite aile interne 210 comporte de préférence cinq poutrelles 262 parallèles à l'axe X.

Dans un mode de réalisation particulier, l'aile externe 220 comporte 8 poutrelles 261 parallèles à l'axe Z au maximum dans sa partie la plus large, et 6 poutrelles 261 parallèles à l'axe Z au minimum dans sa partie la plus étroite.

Ladite aile externe 220 comporte cinq poutrelles 262 parallèles à l'axe X. La distance entre deux rangées de poutrelles successives 261 parallèles à l'axe Z est de préférence comprise entre 3 et 6 mm par exemple de 5mm. De même pour la distance entre deux rangées de poutrelles successives 262 parallèles à l'axe X.

Dans un mode de réalisation particulier, les poutrelles 261 et 262 ont par exemple une largeur d'au minimum 1mm.

Les poutrelles 261 de l'aile interne 210 ont préférentiellement une section de largeur constante et égale pour toutes les poutrelles.

Les poutrelles 261, 262 de l'aile externe 220 ont préférentiellement une section de largeur croissante, selon l'axe Y, entre la zone de surface plane 223 et le renflement 224. Ainsi, les parties des poutrelles 261 et 262 au niveau du renflement 224 ont une section plus large qu'une section des poutrelles de la partie plane 223 de l'aile externe 220.

L'extrémité antérieure de l'aile interne 210, opposée au dos de liaison 230, et qui s'étend parallèlement à l'axe X, est réalisée par une poutrelle 262.

L'extrémité antérieure de l'aile externe 220, opposée au dos de liaison 230, et qui s'étend parallèlement à l'axe X, est réalisée par une pluralité d'extrémités de poutrelles 261, comme on le voit sur les figures 2A, 2B et 6.

Ainsi, l'extrémité antérieure de l'aile interne 210 est plane. Tandis que l'extrémité antérieure de l'aile externe 220 comporte une pluralité de poutrelles 261 en saillie.

Dans l'aile interne 210 et l'aile externe 220, certaines poutrelles 261 ont une section plus importante que les poutrelles 262. Ainsi, lesdites poutrelles 261 font saillie sur les faces internes des ailes 210 et 220. Comme représenté en figure 4, les faces internes des ailes 210, 220 comportent ainsi des nervures 263 dans la direction d'élongation X du canal de réception 240. Dans un mode de réalisation particulier, l'aile interne 210 comporte deux nervures 263 en saillie et l'aile externe 220 comporte quatre nervures 263 en saillie.

Les nervures 263 sont agencées pour venir en prise avec les surfaces latérales de la hausse 130 de l'archet 110.

Ainsi, par les dimensions du canal de réception 240, les nervures 263 sur les deux faces intérieures des ailes 210 et 220 du dispositif amovible 200, et par le moyen de butée formé par l'excroissance 225, le dispositif amovible 200 est à même d'être fixé fermement sur la baguette 110 de l'archet 100 tout en offrant la possibilité d'être enlevé de façon simple. La fixation du dispositif amovible 200 ne nécessite pas le démontage de la hausse. Il est donc à même d'être attaché et détaché sur l'archet 100 de façon simple et rapide.

Le dispositif amovible 200 d'aide au positionnement est de préférence composé de matière plastique et est fabriqué par impression 3D, moulage par injection, ou tout moyen équivalent, idéalement par tout type de procédé de plasturgie.

Par rapport à l'état de la technique, la présente invention offre de nombreux avantages.

Le dispositif amovible d'aide au positionnement des doigts 200 conforme à l'invention est conçu de façon à proposer un faible volume pour limiter l'espace entre le pouce et les autres doigts positionnés sur le dispositif amovible 200. Ainsi, l'utilisateur dispose d'une aide au positionnement offrant une configuration de positionnement des doigts la plus naturelle possible.

De plus, proposer un dispositif amovible 200 avec un volume limité est particulièrement important pour un jeune public. En effet, la préhension d'un volume trop important entrainerait rapidement un inconfort et une fatigue musculaire dans la tenue dudit dispositif.

Un autre avantage est, par rapport à un archet, d'augmenter un peu la distance entre le pouce et les doigts de façon à moins crisper la main et moins serrer les doigts.

La conception légère du dispositif amovible 200 permet ainsi d'éviter de creuser le poignet, et de monter l'épaule et le coude. Cet aspect est particulièrement important pour un public débutant ou désirant corriger sa position pour qui un poids trop important serait rapidement handicapant.

Ainsi, le dispositif amovible 200 par ses caractéristiques et son mode de conception permet d'être particulièrement adapté à un public débutant ou désirant corriger une mauvaise position.

Bien entendu la présente invention n'est pas limitée aux modes de réalisation particuliers qui viennent d'être décrits, mais s'étend à toute variante conforme à son esprit. Ainsi, le dispositif amovible de positionnement 200 peut être réalisé dans des volumes différents autres que ceux précédemment décrits. Il peut être conçu de manière à proposer différentes dimensions adaptées à différentes tailles d'archets et/ou à différents publics spécifiques (jeunes enfants, adolescents, adultes femme, adulte homme ...).

## Revendications

1. Dispositif amovible (200) d'aide au positionnement de doigts sur un archet (100) pour instrument à cordes comprenant :
- un canal de réception (240) d'une partie de l'archet (100) ;
- une première aile (210) comprenant une surface extérieure de positionnement de doigt comportant un élément de marquage (213) agencé pour positionner un pouce ;
- une seconde aile (220) comprenant une surface extérieure de positionnement des doigts comportant un renflement (224) agencé pour positionner un majeur ; et
- dans lequel lesdites première et seconde ailes (210, 220) sont opposées, reliées par un dos de liaison (230) et séparées par ledit canal de réception (240).

2. Dispositif amovible (200) d'aide au positionnement de doigts selon la revendication 1 **caractérisé en ce que** ledit élément de marquage (213) sur ladite première aile (210) est positionné en une extrémité (211) proximale du dispositif qui est destinée à être placée du côté d'une mèche (120) de l'archet (100).

3. Dispositif amovible (200) d'aide au positionnement de doigts selon l'une des revendications précédentes **caractérisé en ce que** l'élément de marquage (213) comporte une cavité (214).

4. Dispositif amovible (200) d'aide au positionnement de doigts selon l'une des revendications précédentes **caractérisé en ce que** ledit renflement (224) sur ladite seconde aile (220) est positionné sur l'extrémité (221) proximale du dispositif qui est destinée à être placée du côté d'une mèche (120) de l'archet (100).

5. Dispositif amovible (200) d'aide au positionnement de doigts selon l'une des revendications précédentes **caractérisé en ce que** le canal de réception est ouvert à ses deux extrémités axiales ainsi que radialement sur toute sa longueur, de sorte que l'engagement dudit dispositif sur l'archet (100) est effectué par glissement depuis une extrémité de l'archet dans le canal de réception (240) dudit dispositif (200).

6. Dispositif amovible (200) d'aide au positionnement de doigts selon la revendication précédente **caractérisé en ce qu'**il comprend une butée (225) agencée pour limiter la course de la partie de l'archet (100), lorsque la partie de l'archet (100) est reçue dans le canal (240).

7. Dispositif amovible (200) d'aide au positionnement de doigts selon l'une des revendications précédentes **caractérisé en ce que** la surface de positionnement de doigt de la première aile (210) comprend une courbure.

8. Dispositif amovible (200) d'aide au positionnement de doigts selon l'une des revendications précédentes **caractérisé en ce qu'**il comprend un profil en U.

9. Dispositif amovible (200) d'aide au positionnement de doigts selon l'une des revendications précédentes **caractérisé en ce que** les ailes (210, 220) comprennent deux séries de poutrelles orthogonales, de préférence une pluralité de rangées de poutrelles parallèles (261) au canal de réception (240) et une pluralité de rangées de poutrelles perpendiculaires (262) au canal de réception (240).

10. Dispositif amovible (200) d'aide au positionnement de doigts selon la revendication précédente **caractérisé en ce que** les ailes (210, 220) comprennent une pluralité de poutrelles parallèles (261) au canal de réception (240) faisant saillie sur des surfaces intérieures desdites ailes (210, 220).

11. Dispositif amovible (200) d'aide au positionnement de doigts selon la revendication précédente **caractérisé en ce que** le canal de réception (240) comporte un diamètre de l'ordre de 1 cm, sensiblement égal au diamètre d'une partie de l'archet (100).

12. Dispositif amovible (200) d'aide au positionnement de doigts selon l'une des revendications précédentes **caractérisé en ce qu'**il est fabriqué par impression 3D.

13. Dispositif amovible (200) d'aide au positionnement de doigts selon l'une des revendications précédentes **caractérisé en ce qu'**il est composé de matière plastique.

14. Dispositif amovible (200) d'aide au positionnement de doigts sur un archet (100) pour instrument à cordes, selon l'une des revendications précédentes, **caractérisé en ce qu'**il comprend un corps ayant un profil en U comportant :
- un canal de réception (240) d'une partie de l'archet (100) centré sur un axe longitudinal (X), ouvert à ses deux extrémités axiales ainsi que radialement sur toute sa longueur, de sorte que l'engagement dudit dispositif sur l'archet (100) est effectué par glissement depuis une extrémité de l'archet dans le canal de réception (240) dudit dispositif (200);
- une première aile (210) comprenant une surface extérieure de positionnement de doigt formée d'une surface concave globalement centrée sur un axe parallèle à l'axe longitudinal et comportant un élément de marquage (213) agencé pour positionner un pouce, positionné sur l'extrémité (211) proximale du dispositif qui est destinée à être placée du côté d'une mèche (120) de l'archet (100);
- une seconde aile (220) comprenant une surface extérieure essentiellement plane de positionnement des doigts comportant un renflement (224) agencé pour positionner un majeur, positionné sur l'extrémité (221) proximale de la seconde aile (220); et
- une butée (225) agencée sur la face interne de l'extrémité distale de la seconde aile, pour limiter la course de la partie de l'archet (100), lorsque la partie de l'archet (100) est reçue dans le canal (240);
- dans lequel lesdites première et seconde ailes (210, 220) sont opposées, reliées par un dos de liaison (230) et séparées par ledit canal de réception (240), la première aile (210) s'étendant en avant de la seconde aile (220) sur son extrémité proximale, et
- ledit élément de marquage (213) est formé d'une cavité (214) sur ladite première aile (210) et est centré sensiblement sur le bord proximal de la seconde aile.

15. Dispositif amovible (200) d'aide au positionnement de doigts selon l'une des revendications précédentes **caractérisé en ce que** la longueur de l'aile interne (210), considérée parallèlement à l'axe longitudinal (X), est comprise entre 35 et 55 mm, avantageusement d'environ 45mm, la longueur maximum de l'aile externe (220), considérée parallèlement à l'axe longitudinal (X), est entre 45 et 65 mm, avantageusement d'environ 55mm, la longueur du renflement (224), considérée parallèlement à l'axe longitudinal (X), est comprise entre 10 et 20 mm, avantageusement de l'ordre de 15 mm, la hauteur de l'aile interne (210) est comprise entre 25 et 33mm, avantageusement d'environ 29mm, la hauteur de l'aile externe 220 est comprise entre 26 et 35mm, avantageusement d'environ 31mm et la largeur maximale du dispositif, considérée au niveau du renflement (224), parallèlement à l'axe transversal (Y) est comprise entre 15 et 25 mm, avantageusement de l'ordre de 20 mm.

16. Dispositif amovible (200) d'aide au positionnement de doigts selon l'une des revendications précédentes, prise en combinaison avec la revendication 6, **caractérisé en ce que** la butée (225) comprend une surface interne (2251) adaptée pour venir en appui sur le côté arrière de la hausse de l'archet, et permettre ainsi d'arrêter la course latérale du dispositif (200) sur la baguette, et une surface arrondie (2252) dimensionnée pour s'appliquer sous la baguette et ainsi bloquer verticalement la course du dispositif (200), de façon à toujours bien positionner la main qui tient le dispositif (200) au même endroit sur l'archet.

17. Ensemble comprenant un dispositif amovible (200) d'aide au positionnement de doigts sur un archet (100) d'instrument à cordes selon l'une des revendications précédentes **caractérisé en ce que** l'archet (100) est un archet de violoncelle ou de contrebasse.

18. Utilisation d'un dispositif amovible (200) d'aide au positionnement de doigts selon l'une des revendications 1 à 16 **caractérisé en ce que** l'ensemble des doigts d'une main est positionné sur ledit dispositif (200) à l'exception de l'index.
